# EUROPÄISCHE PATENTANMELDUNG

(11) **EP 1 698 499 A2**
(43) Veröffentlichungstag der Anmeldung: **06.09.2006**
(21) Anmeldenummer: 06000978.4
(22) Anmeldetag: 18.01.2006
(51) Int. Cl.: B60H 3/06

(54) **Luftfilteranordnung einer Kraftfahrzeug-Innenraum-Belüftungsanlage**

(30) Priorität: 02.03.2005 DE 102005010120
(71) Anmelder: Carl Freudenberg KG, 69469 Weinheim (DE)
(72) Erfinder: Werner, Mike, 68169 Mannheim (DE); Häfner, Uwe, 69469 Weinheim (DE); Capuani, Peter, 69483 Waldmichelbach (DE); Hintenlang, Dieter, 69518 Absteinach (DE)

(57) **Zusammenfassung**

Die Erfindung betrifft eine Luftfilteranordnung einer Kraftfahrzeug-Innenraum-Belüftungsanlage, bei der ein kastenförmiges Luftfilterelement (1) mit einem zick-zack-förmig gefalteten Filtermedium (2) in den Einsteckschacht der Belüftungsanlage eingeschoben ist, wobei das Luftfilterelement (1) eine Schaumstoff-Dichtung (3) an den dem Einsteckschacht zugewandten Seiten des Filterrahmens (4) aufweist, die sich bis auf die dem Deckel des Einsteckschachtes zugewandte Seite (5) erstrecken, wobei die an dem Deckel anliegende Seite des Luftfilterelementes (1) eine zum Deckel hin gewölbte Endfalte (6) besitzt und der Deckel dichtend an einem die Öffnung des Einsteckschachtes umlaufenden Dichtring (7) anliegt.

## Beschreibung

### Technisches Gebiet

Die Erfindung betrifft eine Luftfilteranordnung einer Kraftfahrzeug-Innenraum-Belüftungsanlage.

Luftfilteranordnung einer Kraftfahrzeug-Innenraum-Belüftungsanlage bestehen üblicherweise aus einem kastenförmigen Luftfilterelement, bei dem ein zick-zack-förmig gefaltetes Filtermedium von einem Filterrahmen eingefasst wird. Dieses Luftfilterelement ist quer in den Luftstrom einer Kraftfahrzeug-Innenraum-Belüftungsanlage eingeschoben und durch den Filterrahmen oder eine darauf angeordnete Dichtung gegen das Gehäuse der Belüftungsanlage abgedichtet, so dass der Luftstrom das Filterelement passieren muss. Zur Aufrechterhaltung einer hohen Filterleistung ist das Filterelement in einem Einsteckschacht angeordnet, der den einfachen Wechsel des in seiner Filterleistung verbrauchten Filterelementes gestattet. Der Einsteckschacht für das Filterelement in die Belüftungsanlage wird üblicherweise durch einen Deckel verschlossen, der die Belüftungsanlage vor dem Eindringen unfiltrierter Luft sichert. Dazu ist entweder der Deckel oder das Gehäuse mit einer um die Öffnung des Einsteckschachtes umlaufenden Dichtung versehen. Es hat sich gezeigt, dass fest am Deckel oder am Gehäuse angebrachte Dichtungen über die Lebensdauer eines Fahrzeuges zu Abnutzungen und damit verminderter Dichtigkeit neigen.

### Stand der Technik

Zwar ist aus dem Dokument EP 1 304 244 A2 eine Luftfilteranordnung bekannt, bei der dem Luftfilter eine Dichteinrichtung zur Dichtung zwischen Luftfiltergehäuse und dem Deckel zugeordnet ist und die dadurch bei jedem Filterwechsel mit erneuert wird, aber diese Zuordnung der Dichteinrichtung zum Luftfilter bedingt einen hohen Verpackungsaufwand, Materialbedarf für die Dichtung und einen großen Lagerhaltungsraum.

### Darstellung der Erfindung

Die Erfindung hat sich die Aufgabe gestellt, eine Luftfilteranordnung anzugeben, die in einfacher Weise sowohl das Problem der Dichtungsabnutzung löst, als auch der Materialbedarf für die Dichtung, den Verpackungsaufwand und damit auch den Lagerhaltungsraum reduziert.

Erfindungsgemäß wird die Aufgabe durch eine Luftfilteranordnung einer Kraftfahrzeug-Innenraum-Belüftungsanlage gelöst, bei der ein kastenförmiges Luftfilterelement 1 mit einem zick-zack-förmig gefalteten Filtermedium 2 in den Einsteckschacht der Belüftungsanlage eingeschoben ist, wobei das Luftfilterelement 1 eine Schaumstoff-Dichtung 3 an den dem Einsteckschacht zugewandten Seiten des Filterrahmens 4 aufweist, die sich bis auf die dem Deckel des Einsteckschachtes zugewandte Seite 5 erstrecken, wobei die an dem Deckel anliegende Seite des Luftfilterelementes 1 eine zum Deckel hin gewölbte Endfalte 6 besitzt und der Deckel dichtend an einem die Öffnung des Einsteckschachtes umlaufenden Dichtring 7 anliegt. Durch die erfindungsgemäße Anordnung ist der Dichtring 7 ein separates Bauteil, das bei jedem Filterwechsel mit gewechselt werden kann und somit keinem Verschleiß durch mehrmaligen Ein- und Ausbau unterliegt. Weiterhin wird der Materialverbrauch für den Dichtring 7 auf das notwendige Maß beschränkt und durch die separate Beifügung in der Handelsverpackung ist ein geringerer Verpackungsaufwand sowie ein geringerer Lagerhaltungsraum erforderlich.

Vorzugsweise ist die Luftfilteranordnung eine, bei der der Dichtring 7 eine im Bezug auf die beiden Hauptseiten einseitige Kleberbeschichtung aufweist. Dadurch ist eine einfache und sichere Fixierung des Dichtringes 7 am Deckel oder dem Belüftungsgehäuse möglich.

Besonders bevorzug ist eine Luftfilteranordnung, bei der der Dichtring 7 in seinen äußeren Maßen an die Länge und Breite des Deckels und in seinen inneren Maßen an die Form der Öffnung des Einsteckschachtes angepasst ist. Damit werden optimale Dichtigkeitsbedingungen erzielt.

Eine weitere vorteilhafte Ausgestaltung der erfindungsgemäßen Luftfilteranordnung besteht darin, dass der Dichtring 7 an den Verbindungsstellen zwischen den Längs- und Querseiten nur schmale Verbindungsstege 8 in Form von Filmschanieren aufweist, die eine Material sparende Fertigung des Dichtringes 7 gestatten. Die vorgeschlagene Lösung reduziert den Materialabfall, der bei der Herstellung des Dichtringes 7 durch Ausstanzen aus einem flächenförmigen Dichtmaterial entsteht. Trotzdem gewährleisten die Verbindungsstege 8 eine zu den Dichtringen 7 durchgehender Eckverbindung der Längs- und Querseiten vergleichbare Dichtigkeit.

Vorteilhafter Weise besteht bei der erfindungsgemäße Luftfilteranordnung der Dichtring 7 aus Polyethylen(PE)-Schaum. Dieses Material hat sich durch seine elastischen Eigenschaften und seine Temperaturbeständigkeit unter Kraftfahrzeug-bedingungen als sehr geeignet erwiesen.

Der Dichtring 7 der erfindungsgemäßen Luftfilteranordnung hat eine Dicke von 3 mm bis 5 mm.

### Kurzbeschreibung der Zeichnung

Die Erfindung wird nachfolgend an Hand von fünf Abbildungen näher erläutert.

Es zeigen:
- Figur 1: eine perspektivische Teilansicht des Filterelements 1, die dem
- Deckel: des Einsteckschachtes der Belüftungsanlage zugewandt ist
- Figur 2: eine perspektivische Teilansicht des Filterelements 1, die dem
- Boden: des Einsteckschachtes der Belüftungsanlage zugewandt ist
- Figur 3: eine erste Ausführungsform des Dichtringes 7a
- Figur 4: eine zweite Ausführungsform des Dichtringes 7b
- Figur 5: eine dritte Ausführungsform des Dichtringes 7c

### Ausführung der Erfindung

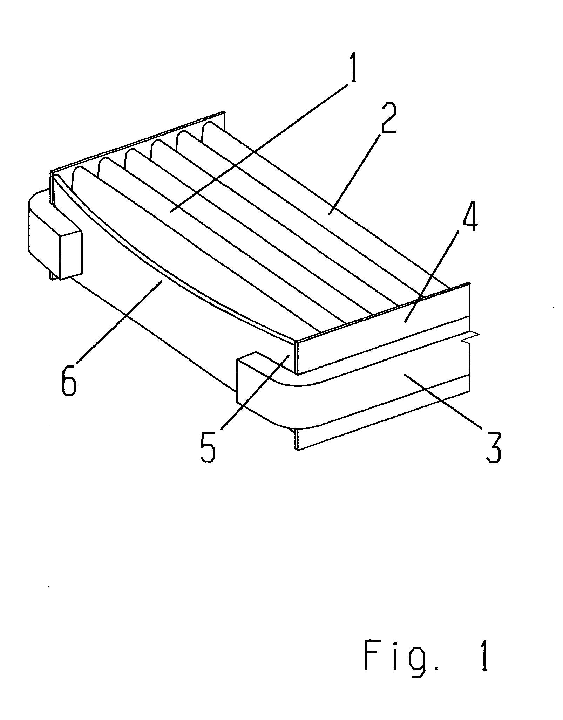

Figur 1 zeigt eine perspektivische Teilansicht des oberen Teils des Filterelements 1, die dem Deckel des Einsteckschachtes der Belüftungsanlage zugewandt ist. Dabei ist zwischen zwei Filterrahmenseiten 4 das Filtermedium 2 zick-zack-förmig angeordnet. Die Endfalte 6 ist in Richtung des Deckels gewölbt. Auf den Filterrahmen 4 ist eine Schaumstoff-Dichtung 3 befestigt, die das Filterelement 1 an den den Einsteckschacht zugewandeten Seiten umläuft und sich, wie dargestellt, bis auf die dem Deckel des Belüftungsgehäuses zugewandeten Seite des Filterelements 1 erstreckt.

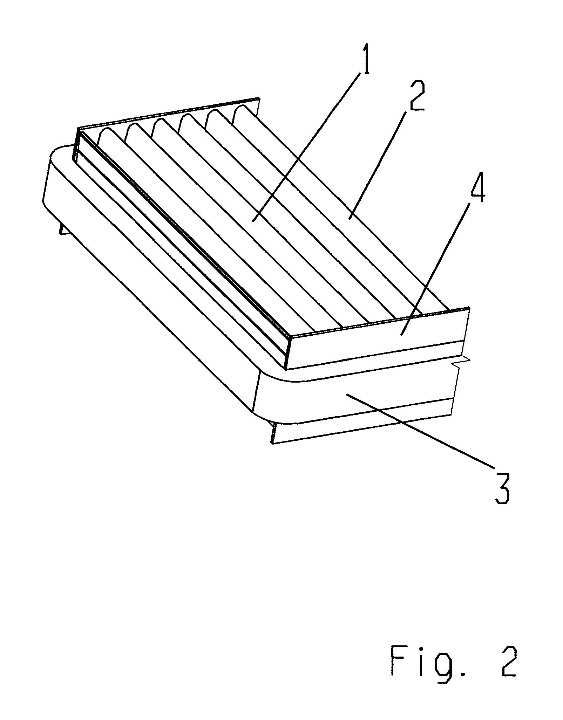

Figur 2 zeigt in Ergänzung dazu den unteren Teil des Filterelements 1, der dem Boden des Einsteckschachtes der Belüftungsanlage zugewandt ist. Die umlaufende Ausführung der Schaumstoff-Dichtung 3 wird dadurch dargestellt.

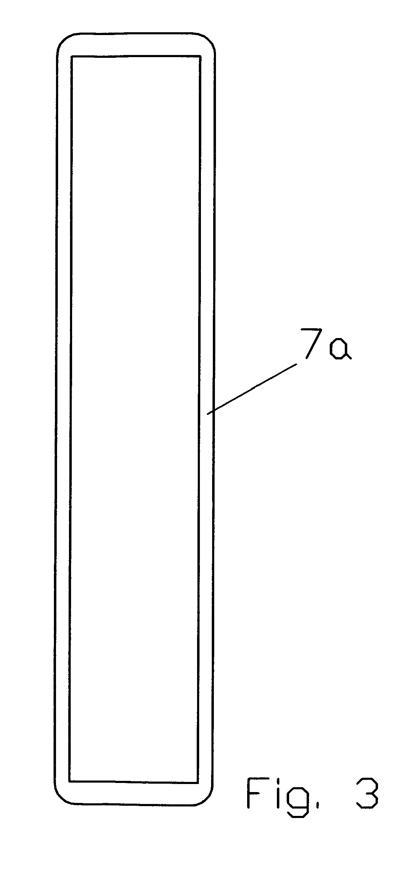

Figur 3 zeigt eine erste Ausführungsform des Dichtringes 7a, der nur aus einem die Einstecköffnung des Einsteckschachtes umlaufenden Ring aus Dichtmaterial darstellt.

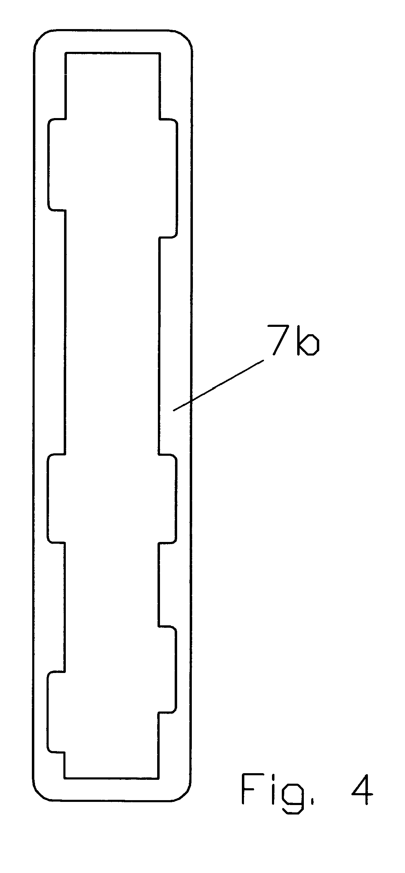

Figur 4 zeigt eine zweite Ausführungsform des Dichtringes 7b, bei der der Dichtring 7 mit seiner Innenseite an die Kontur des Einsteckschachtes angepasst ist. Weiterhin wird dadurch die Auflagefläche des Deckels auf den Dichtring 7 vergrößert, wodurch ein unbeabsichtigtes Verschieben des Dichtringes 7 verringert und die Sicherheit der geforderten Dichtigkeit erhöht wird.

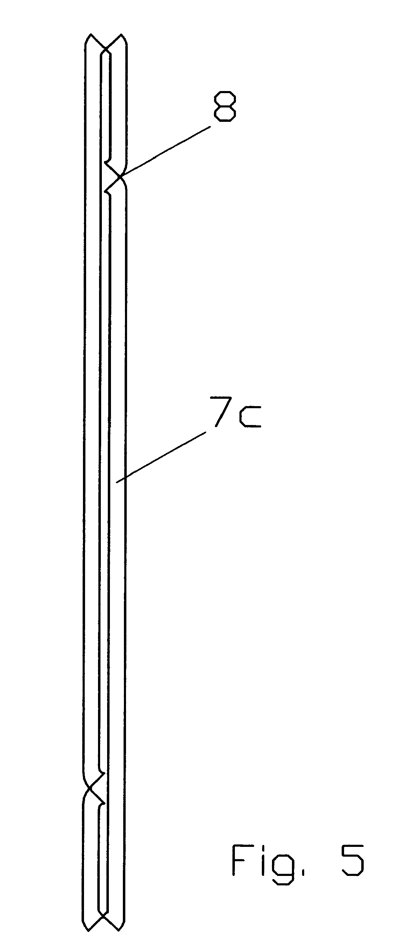

Figur 5 zeigt schließlich eine dritte Ausführungsform des Dichtringes 7c, die an den Verbindungsstellen zwischen den Längs- und Querseiten nur schmale Verbindungsstege 8 in Form von Filmschanieren aufweist. Im Einbauzustand wird durch Verschiebung der Längs- und Querseitenstücke gegeneinander ein Dichtring 7 aufgespannt, bei dem die Kanten der Eckstellen aneinander liegen und im Zusammenwirken mit den Verbindungsstegen 8 eine zu den anderen erfindungsgemäßen Dichtringen vergleichbare Dichtigkeit gewährleisten.

## Patentansprüche

1. Luftfilteranordnung einer Kraftfahrzeug-Innenraum-Belüftungsanlage, bei der ein kastenförmiges Luftfilterelement (1) mit einem zick-zack-förmig gefalteten Filtermedium (2) in den Einsteckschacht der Belüftungsanlage eingeschoben ist, wobei das Luftfilterelement (1) eine Schaumstoff-Dichtung (3) an den dem Einsteckschacht zugewandten Seiten des Filterrahmens (4) aufweist, die sich bis auf die dem Deckel des Einsteckschachtes zugewandte Seite (5) erstrecken, **dadurch gekennzeichnet, dass** die an dem Deckel anliegende Seite des Luftfilterelementes (1) eine zum Deckel hin gewölbte Endfalte (6) besitzt und der Deckel dichtend an einem die Öffnung des Einsteckschachtes umlaufenden Dichtring (7) anliegt.

2. Luftfilteranordnung nach Anspruch 1, **dadurch gekennzeichnet, dass** der Dichtring (7) eine im Bezug auf die beiden Hauptseiten einseitige Kleberbeschichtung aufweist.

3. Luftfilteranordnung nach Anspruch 2, **dadurch gekennzeichnet, dass** der Dichtring (7) in seinen äußeren Maßen an die Länge und Breite des Deckels und in seinen inneren Maßen an die Form der Öffnung des Einsteckschachtes angepasst ist.

4. Luftfilteranordnung nach einem der Ansprüche 1 bis 3, **dadurch gekennzeichnet, dass** der Dichtring (7) an den Verbindungsstellen zwischen den Längs- und Querseiten nur schmale Verbindungsstege (8) in Form von Filmschanieren aufweist, die eine Material sparende Fertigung des Dichtringes (7) gestatten.

5. Luftfilteranordnung nach einem der Ansprüche 1 bis 4, **dadurch gekennzeichnet, dass** der Dichtring (7) aus Polyethylen (PE)-Schaum besteht.

6. Luftfilteranordnung nach einem der Ansprüche 1 bis 4, **dadurch gekennzeichnet, dass** der Dichtring (7) eine Dicke von 3 mm bis 5 mm hat.
